# EUROPEAN PATENT APPLICATION

(11) **EP 0 824 135 A1**
(43) Date of publication of application: **18.02.1998**
(21) Application number: 97306126.0
(22) Date of filing: 12.08.1997
(51) Int. Cl.: C08L 55/02, C08L 51/04, C08L 25/08, C08L 23/28

(54) **Thermoplastic composition containing chlorinated polyolefin and high rubber graft copolymer**

(30) Priority: 13.08.1996 US 696425
(71) Applicant: GENERAL ELECTRIC COMPANY, Schenectady, NY 12345 (US)
(72) Inventor: Wypart, Roman W., Parkersburg, West Virginia 26101 (US); Avakian, Roger W., Parkersburg, West Virginia 26101 (US)
(74) Representative: Szary, Anne Catherine, Dr.

(57) **Abstract**

The present invention relates to impact resistant polymer compositions for molding and extrusion applications which polymer composition comprises a blend of a monovinylidene aromatic compound and a chlorinated polyolefin. The monovinylidene aromatic compound is preferably a rubber modified monovinylidene aromatic resin comprising (a) a rubber modified monovinylidene aromatic graft copolymer and (b) an ungrafted rigid copolymer. The composition has a unique combination of excellent impact resistance, high heat deflection temperature, and good tensile properties. The compositions are useful for molding articles.

## Description

The present invention relates to impact resistant polymer compositions for molding applications which polymer composition contains a monovinylidene aromatic compound and a chlorinated polyolefin. The monovinylidene aromatic compound preferably comprises (a) a rubber modified monovinylidene aromatic graft copolymer and (b) an ungrafted rigid copolymer.

The prior art has disclosed various compounds containing chlorinated polyethylene and styrenic polymers.

For example, U.S. Pat. No. 3,494,982 discloses blends of styrene-acrylonitrile-butadiene resins and chlorinated polyethylene.

U.S. Pat. No. 3,658,950 discloses simple blends of styrene acrylonitrile resins and chlorinated polyethylene.

U.S. Pat. No. 4,144,287 discloses a composition that contains a styrene-acrylonitrile-butadiene resin obtained from a combination of emulsion polymerization followed by bulk polymerization, and chlorinated polyethylene.

U.S. Pat. No. 4,341,885 discloses an impact resistant composition that contains styrene-acrylonitrile, an unsaturated rubber, and chlorinated polyethylene.

U.S. Pat. No. 4,424,309 discloses a composition that contains styrene-acrylonitrile resin, a saturated rubber, chlorinated polyethylene, and PVC.

U.S. Pat. No. 4,468,487 discloses a composition that contains styrene-acrylonitrile resin, a saturated rubber, and chlorinated polyethylene.

U.S. Pat. No. 4,794,143 discloses a process to prepare impact resistant compositions which contain a styrene polymer, a chlorinated polyethylene, and a Lewis acid.

Co-pending and commonly owned U.S. Pat. Serial Number 08/530,547, filed September 19, 1995, discloses blends of chlorinated polyethylene with greater than about 65% by weight rubber in the styrene-acrylonitrile-butadiene resins wherein the blends have good thermoplastic elastomer properties.

However, the prior art does not disclose the use of a monovinylidene aromatic compound comprising (a) a rubber modified monovinylidene aromatic graft copolymer and (b) an ungrafted rigid copolymer used in combination to prepare impact resistant compositions containing a chlorinated polyethylene.

Therefore, the object of the present invention is to provide a thermoplastic molding composition having excellent impact resistance.

Other objects of this invention will become apparent from the following description of this invention.

### SUMMARY OF THE INVENTION

This invention is directed to a thermoplastic resin molding composition having excellent impact resistant properties using a chlorinated polyolefin while maintaining good mechanical properties such as heat deflection temperature and tensile properties. Specifically the thermoplastic resin composition is a monovinylidene aromatic compound comprising (a) a rubber modified monovinylidene aromatic graft copolymer substrate and (b) an ungrafted rigid copolymer superstrate. The chlorinated polyolefin is preferably a high molecular weight chlorinated polyethylene having a melt viscosity of at least about 10 poise at 1000 sec⁻¹.

### DETAILED DESCRIPTION OF THE INVENTION

As stated previously, the invention is directed to an impact resistant thermoplastic molding composition and to articles molded therefrom. The impact resistant thermoplastic molding composition contains a monovinylidene aromatic compound comprising (a) a rubber modified monovinylidene aromatic graft copolymer substrate and (b) an ungrafted rigid copolymer superstrate. The impact resistant thermoplastic molding composition further contains a chlorinated polyolefin, preferably a high molecular weight chlorinated polyethylene having a melt viscosity of at least about 10 poise at 1000 sec⁻¹, more preferably greater than about 19 poise at 1000 sec⁻¹.

The monovinylidene aromatic compound of the present invention is a graft copolymer resin comprising a rubber modified monovinylidene aromatic graft copolymer substrate (also referred to herein as a rubbery polymeric substrate) and an ungrafted rigid copolymer superstrate (also referred to herein as a rigid polymeric superstrate). In a preferred embodiment, the graft copolymer comprises more than 30% by weight, preferably more than 40% by weight rubbery polymeric substrate to rigid polymeric superstrate. The graft copolymer resin may also be used in combination with various block copolymer resins, such as, for example, polystyrene-polybutadiene diblock and triblock copolymer resins, polystyrene-poly(ethylene-butylene) diblock and triblock copolymer resins, and polystyrene-poly(ethylene-propylene) diblock and triblock copolymer resins, as well as mixtures of block copolymer resins.

The rubbery polymeric substrate generally comprises repeating units derived from one or more ethylenically unsaturated monomers selected from conjugated diene monomers, nonconjugated diene monomers, (C₂-C₈)olefin monomers, (C₁-C₁₂)alkyl acrylate monomers, ethylenically unsaturated nitrile monomers, and vinyl aromatic monomers. Useful ratios of the aforementioned monomers as well as other useful monomers and rubbery polymeric substrates will be apparent to those skilled in the art.

Suitable conjugated diene monomers include, for example, 1,3-butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, dichlorobutadiene, bromobutadiene, and dibromobutadiene as well as mixtures of diene monomers. In preferred embodiments, the conjugated diene monomer is 1,3-butadiene or mixtures of 1,3-butadiene with styrene monomer. Suitable non-conjugated diene monomers include, for example, ethylidene norbornene, dicyclopentadiene, hexadiene, and phenyl norbornene. Those skilled in the art can readily select other useful conjugated and nonconjugated diene monomers.

Useful C₂-C₈olefin monomers include compounds having from 2 to about 8 carbon atoms per molecule and having a single site of ethylenic unsaturation per molecule. Suitable (C₂-C₈)olefin monomers include, for example, ethylene, propene, 1-butene, 1-pentene, heptene. Useful (C₁-C₁₂)alkyl acrylate monomers include acrylates having straight or branched alkyl substituent groups. The alkyl substituent groups generally have from 1 to about 12 carbon atoms per alkyl group and include, for example, methyl, ethyl, n-butyl, sec-butyl, t-butyl, n-propyl, iso-propyl, pentyl, hexyl, heptyl, octyl, nonyl, decyl, undecyl, and dodecyl. Illustrative examples of suitable (C₁-C₁₂)alkyl acrylates include butyl acrylate, iso-pentyl acrylate, n-hexyl acrylate, and 2-ethyl hexyl acrylate as well as mixtures of any of the foregoing and mixtures of any of the foregoing with other acrylates such as, for example, ethyl acrylate and methyl acrylate. The ethylenically unsaturated nitrile monomer includes acyclic compounds having a single nitrile group and a single site of ethylenic unsaturation per molecule and includes, for example, acrylonitrile and methacrylonitrile. Those skilled in the art can readily select other suitable (C₂-C₈)olefin, (C₁-C₁₂)alkyl acrylate, and ethylenically unsaturated nitrile monomers, as well as useful ratios of monomers.

Suitable vinyl aromatic monomers include, for example, styrene and substituted styrenes having one or more alkyl, alkoxyl, hydroxyl, or halo substituent groups attached to the aromatic ring, including, for example, α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene, and vinyl-substituted condensed aromatic ring structures, such as, for example, vinyl napthalene, vinyl anthracene; as well as mixtures of vinyl aromatic monomers. In a preferred embodiment, the vinyl aromatic monomer, when one is used, is styrene, α-methyl styrene, or mixtures of styrene and α-methyl styrene.

The rubbery polymeric substrate may, optionally, include a minor amount, for example, up to 5% by weight based on the weight of the monomers used for the rubbery substrate, of repeating units derived from a polyethylenically unsaturated crosslinking monomer, for example, butylene diacrylate, divinyl benzene, butene diol dimethacrylate, trimethylolpropane tri(meth)acrylate, allyl methacrylate, diallyl maleate, and triallyl cyanurate. Those skilled in the art will be able to select an appropriate polyethylenically unsaturated crosslinking monomer, when one is desired, as well as an appropriate amount of the monomer without undue experimentation.

In a preferred embodiment, the substrate comprises repeating units derived from one or more conjugated diene monomers, such as, for example, a substantially homopolymeric polybutadiene rubber. In a second preferred embodiment, the substrate comprises repeating units derived from one or more conjugated diene monomers and one or more copolymerizable comonomers selected from vinyl aromatic monomers and ethylenically unsaturated nitrile monomers, such as, for example, styrene-butadiene copolymers, acrylonitrile-butadiene copolymers and styrene-butadiene-acrylonitrile copolymers. In a third preferred embodiment, the substrate comprises repeating units derived from one or more (C₁-C₁₂)alkyl acrylate monomers, more preferably from one or more monomers selected from butyl acrylate and n-hexyl acrylate including mixtures of one or both of the foregoing with other acrylates such as, for example, ethyl acrylate. In a fourth preferred embodiment, the substrate comprises units derived from one or more olefin monomers and includes, for example, ethylene/propylene copolymers, ethylene/propylene/non-conjugated diene monomer terpolymers.

Suitable rubbery polymeric substrates are made by known processes, for example, emulsion polymerization and mass polymerization. Generally, the rubbery polymeric substrate is made by aqueous emulsion polymerization in the presence of a free radical initiator, for example, an organic peroxide or persulfate initiator or a redox initiator system, and, optionally, in the presence of a chain transfer agent, for example, an alkyl mercaptan. The rubbery polymeric substrate may exhibit a unimodal particle size distribution or a multimodal distribution, such as a bimodal distribution.

The graft copolymer resin, in addition to comprising a rubbery polymeric substrate, also contains an ungrafted rigid copolymer superstrate (i.e., the rigid polymeric superstrate). The rigid polymeric superstrate includes repeating units derived monomers selected from the group consisting of (C₁-C₁₂)alkyl acrylate monomers, vinyl aromatic monomers and ethylenically unsaturated nitrile monomers. One skilled in the art can select an appropriate monomer or combination of monomers to afford a suitable rigid polymeric substrate. Suitable vinyl aromatic monomers and ethylenically unsaturated nitrile monomers are set forth above. As used herein the terminology alkyl acrylate monomers refers collectively to acrylate monomers and methacrylate monomers. Suitable alkyl acrylate monomers include the acrylate monomers disclosed above and their methacrylate analogs such as, for example, methyl methacrylate, ethyl methacrylate, propyl methacrylate, iso-propyl methacrylate, butyl methacrylate, hexyl methacrylate, decyl methacrylate, and the like.

In a preferred embodiment, the rigid polymeric superstrate comprises repeating units derived from one or more monomers selected from styrene, α-methyl styrene, and acrylonitrile. In a more preferred embodiment, the superstrate comprises from about 60% to about 90% by weight repeating units derived from styrene (optionally from α-methylstyrene or a blend of α-methylstyrene and styrene) and from about 10% to about 40% by weight repeating units derived from acrylonitrile.

In an alternative preferred embodiment, the rigid polymeric superstrate comprises repeating units derived from one or more (C₁-C₁₂)alkyl acrylate monomers, and may, optionally, further comprise repeating units derived from one or more monomers selected from vinyl aromatic monomers and ethylenically unsaturated nitrile monomers. In another preferred embodiment, the rigid polymeric superstrate comprises greater than or equal to 50% by weight repeating units derived from one or more (C₁-C₁₂)alkyl acrylate monomers, more preferably from one or more monomers selected from methyl methacrylate, ethyl methacrylate, propyl methacrylate, isopropyl methacrylate and butyl methacrylate.

The rubbery substrate and the rigid superstrate may each independently optionally include minor amounts, for example, up to about 15% by weight of the total weight of the respective substrate or superstrate, of repeating units derived from one or more other copolymerizable ethylenically unsaturated monomers. Illustrative examples of suitable copolymerizable unsaturated monomers include ethylenically unsaturated carboxylic acids such as, for example, acrylic acid, methacrylic acid, itaconic acid; hydroxy(C₁-C₁₂)alkyl acrylate monomers such as, for example, hydroxyethyl methacrylate; (C₄-C₁₂)cycloalkyl acrylate monomers such as for example, cyclohexyl methacrylate; (meth)acrylamide monomers such as, for example, acrylamide and methacrylamide; vinyl esters such as, for example, vinyl acetate and vinyl propionate. The (C₄-C₁₂)cycloalkyl moiety above includes cyclic alkyl substituent groups having from about 4 to about 12 carbon atoms per group and the term (meth)acrylamide refers collectively to acrylamides and methacrylamides. Those skilled in the art can readily select other suitable copolymerizable ethylenically unsaturated monomers based, in part, on specific requirements for a particular composition.

The rigid polymeric superstrate may, optionally, include a minor amount, for example, up to about 3% by weight, more preferably up to about 1.5% by weight, of repeating units derived from one or more polyethylenically crosslinking monomers. Suitable crosslinking monomers are disclosed above.

The graft copolymer is made according to known processes by polymerizing one or more monomers selected to provide a rigid polymeric superstrate in the presence of particles of the rubbery polymeric substrate under conditions such that at least a portion of the rigid polymeric superstrate is chemically grafted to the rubbery polymeric substrate by covalent bonds. In a preferred embodiment, the superstrate monomers are polymerized by an aqueous emulsion or aqueous suspension polymerization reaction in the presence of substrate particles and a polymerization initiator system, for example, a thermal or redox initiator system wherein a portion of the polymerizing chains of the superstrate monomers are chemically bonded or grafted to the substrate via reaction with unsaturated sites in the substrate. The unsaturated sites in the substrate are provided, for example, by residual unsaturated sites in repeating units derived from a conjugated diene or by residual unsaturated sites in repeating units derived from a graft linking monomer. In a preferred embodiment, the graft copolymer resin is a high rubber graft copolymer resin. By the term high rubber graft is meant that greater than about 30% by weight, preferably greater than about 40% by weight, and most preferably greater than about 45% by weight of the rigid polymeric superstrate is chemically grafted to the rubbery polymeric substrate.

In a first preferred embodiment, the substrate comprises repeating units derived from one or more conjugated diene monomers, and further comprise repeating units derived from one or more monomers selected from vinyl aromatic monomers and optionally, ethylenically unsaturated nitrile monomers, and the superstrate comprises repeating units derived from one or more monomers selected from vinyl aromatic monomers and ethylenically unsaturated nitrile monomers.

Especially preferred are acrylonitrile-butadiene-styrene copolymers having greater than 30% by weight rubbery polymeric substrate, preferably greater than about 45% by weight rubbery polymeric substrate. The most preferred rubbery substrates comprise polybutadiene or styrene-butadiene copolymer known as high rubber graft acrylonitrile-butadiene-styrene copolymers. The phrase "high rubber graft" refers generally to graft copolymer resins wherein at least about 30% by weight, preferably at least about 45% by weight of the rigid polymeric phase is chemically bound or grafted to the rubbery polymeric phase. Suitable ABS-type high rubber graft copolymers are commercially available from, for example, GE Specialty Chemicals, Inc. under the trademark BLENDEX and include grades 131, 336, 338, 360, and 415.

The chlorinated polyolefin used in the present invention is preferably a chlorinated polyethylene resin. Chlorinated polyethylene resins are well known in the art and may be prepared by a solution or gas-phase chlorination processes. Reference may be made, for example, to U.S. Pat. Nos. 3,935,181 and 4,197,386. The starting material preferably is high-density polyethylene, that is, polyethylene having a density of between about 935 kg/m³ and about 965 kg/m³. This material can be made by employing a catalyst based on transition metals. Cross-linking of all or part of the chlorinated polyethylene can be effected, for example, with the aid of a diamine. It is preferred to utilize a chlorinated polyethylene having a chlorine content between 15 and 50 weight percent, most preferably between 20 and 40 weight percent. Such chlorinated polyethylenes are commercially available. A mixture of more than one chlorinated polyethylene may be employed in the preparation of the composition. The chlorinated polyolefin may be a chlorosulfonated polyolefin such as a chlorosulfonated polyethylene.

The glass transition temperature of the chlorinated polyethylene is advantageously lower than or equal to + 5°C. The lower limit is not critical. In practice, the lower limit of the glass transition temperature will be dictated by requirements regarding crystallinity and chlorine content, and generally will be about -35°C.

It should be noted that chlorinated polyethylene usually has two transition temperatures. One transition temperature lies in the region of -120°C. The other transition temperature occurs at a higher value and varies with the way the chlorinated polyethylene is prepared. This latter transition temperature is the one generally referred to in the literature when the glass transition temperature of chlorinated polyethylene is discussed. Therefore, this latter temperature is also the one referred to as the glass transition temperature of chlorinated polyethylene in the present invention.

The chlorinated polyolefin is preferably a chlorinated polyethylene having a weight average molecular weight of between 30,000 and 1,500,000, more preferably between 50,000 and 1,000,000, and most preferably a relatively high molecular weight of between 100,000 and 700,000. As an indication of the molecular weight of the chlorinated polyethylene, melt viscosity is generally used. The test procedure involves measuring the viscosity of a 25 gram dried sample under a shear rate of 1000 sec⁻¹ at a temperature of 190°C using a capillary rheometer equipped with a capillary having a 0.0402 inch diameter and a 0.2098 inch length. Before testing, the chlorinated polyethylene is generally preblended with 2% by weight calcium stearate, 0.5% by weight stearic acid, and 3% by weight epoxidized soya oil, wherein all weights are based upon 100 parts by weight of the the chlorinated polyethylene . The melt viscosity is preferably greater than about 10 poise, and more preferably greater than about 19 poise as measured under these conditions.

The amount of chlorinated polyethylene employed is between about 5 and about 35 parts by weight based on the total weight of the composition. If less than about 5 weight percent chlorinated polyethylene is used, the surprising impact strength is not consistently demonstrated.

Maintaining the amount of chlorinated polyolefin within this range yields a polymer composition having an extremely high impact resistance. Most advantageously, optimum properties are obtained if the weight ratio is maintained within the still more narrow range between about 10% and about 25%, wherein all weights are based on the total weight of the composition.

The amount of rubber attributed to the rubber modified monovinylidene aromatic graft copolymer (i.e., the high rubber graft resin) is preferably from about 3% by weight to about 35% by weight, more preferably from about 5% by weight to about 20% by weight; wherein all weights are based upon the total weight of the composition. The ratio of the rubber modified monovinylidene aromatic graft copolymer to the ungrafted rigid copolymer is preferably between about 1 to 17 and 9 to 1. The final ratio between the thermoplastic resin composition components can be readily determined by one of ordinary skill based upon the ultimate properties desired.

In addition, other additives may be employed with the composition of this invention such as flame retardant additives, antioxidants, lubricants, plasticizers, light and heat stabilizer, acid acceptors, processing aides, other impact modifiers, mold release agents, etc. Especially useful are heat and light stabilizers and additives known in the art for poly(vinyl chloride). The composition of the present invention may also contain fillers and/or reinforcing fillers and fibers.

The compounds of the present invention are prepared by thoroughly mixing all ingredients in a standard polymer mixer, such as a mill mixer, an internal mixer, or an extruder. Temperature and shear rate are important mixing parameters, as known to persons skilled in the art of polymer mixing. The optimum mixing temperature will vary according to the shear provided by the mixing equipment employed, in a manner similar to that observed when preparing conventional polymer blends. Thus, a mixer which provides high shear may be operated at a lower temperature than a mixer which provides low shear. It will be clear to persons skilled in the art how to process the particularly advantageous impact resistant compounds of the present invention.

The polymer composition of the invention is particularly suitable for making objects that satisfy high requirements as regards to mechanical and physical properties, including impact resistance, rigidity, etc. The present polymer composition is suitable for many applications, and a wide range of impact-resistant objects can be made therefrom, including tubes, bottles, furniture, dashboards for cars, cabinets and casings for electronic and domestic equipment, shoe heels, caravans, skis and surfboards. Articles made from the present compositions can be formed by methods known in the art, including injection moldings, extrusion, blow molding, injection-blow molding, calendering, and the like.

All patents cited are incorporated herein by reference.

### DETAILED DESCRIPTION OF THE PREFERRED EMBODIMENTS

The following Examples are provided to illustrate various embodiments of this invention. The Examples are for the purpose of illustration only, and should not be regarded as limiting the invention to any of the specific materials or conditions described therein.

The materials employed in these Examples as components parts (measured in parts by weight) were as follows:

| | |
|---|---|
| CPE-1 | a commercially available chlorinated polyethylene obtained from Dow Chemical U.S.A. under the trademark TYRIN as grade 3615 P having a melt viscosity of 24 poise measured at 1000 sec⁻¹ and a chlorine content of about 36%. |
| CPE-2 | a commercially available chlorinated polyethylene obtained from Dow Chemical U.S.A. under the trademark TYRIN as grade 3611 P having a melt viscosity of 8 poise measured at 1000 sec⁻¹ and a chlorine content of about 36%. |
| CPE-3 | a commercially available chlorinated polyethylene obtained from Dow Chemical U.S.A. under the trademark TYRIN as grade 4211 P having a melt viscosity of 9.5 poise measured at 1000 sec⁻¹ and a chlorine content of about 42%. |
| HRG | a high rubber graft copolymer prepared by emulsion polymerization grafting a styrene-acrylonitrile onto a butadiene rubber in a 50/50 weight ratio. |
| SAN | styrene-acrylonitrile copolymer (acrylonitrile to styrene ratio of 28:72, weight to weight), with a melt flow index of about 23.8 g/10 min. |
| HIPS | high impact polystyrene obtained from Dow Chemical Co. as under the trademark STYRON as grade 482. |
| AMSAN-1 | a commercially available α-methylstyrene-styrene-acrylonitrile in a 68:3:29 weight ratio of monomers. |
| AMSAN-2 | a blend of AMSAN-1 and HRG in a 78:28 weigh ratio. |

All blends were prepared on a twin screw extruder at approximately 380°F melt temperature. ASTM parts were all injection molded at approximately 405°F melt temperature. Testing of physical and mechanical properties such as notched Izod impact (NII), tensile properties, and HDT were performed according to ASTM standards on molded specimens having a thickness of about 1/8". All materials were dried in an oven at 80°C for about 4 hours prior to viscosity measurement.

**Table 1.**

| Composition: | 1 | 2 | 3 | 4 | 5 | 6 | 7 | 8 | 9 | 10 |
|---|---|---|---|---|---|---|---|---|---|---|
| SAN | 70 | 52 | 44 | 34 | 76 | 62 | 66 | 52 | 56 | 42 |
| HRG | 30 | 48 | 66 | 76 | 10 | 10 | 20 | 20 | 30 | 30 |
| CPE-1 | 0 | 0 | 0 | 0 | 14 | 28 | 14 | 28 | 14 | 28 |
| CPE-2 | 0 | 0 | 0 | 0 | 0 | 0 | 0 | 0 | 0 | 0 |
| CPE-3 | 0 | 0 | 0 | 0 | 0 | 0 | 0 | 0 | 0 | 0 |
| Adds. | yes | yes | yes | yes | yes | yes | yes | yes | yes | yes |
| DTL | 0 | 0 | 0 | 0.8 | 0.8 | 0.8 | 0.8 | 0.8 | 0.8 | 0.8 |
| HIPS | 0 | 0 | 0 | 0 | 0 | 0 | 0 | 0 | 0 | 0 |
| Total rubber* content (Wt. %) | 15 | 24 | 33 | 38 | 5 | 5 | 10 | 10 | 15 | 15 |

| Properties: | | | | | | | | | | |
|---|---|---|---|---|---|---|---|---|---|---|
| NII, ft-lb/in | 1.55 | 7.27 | 8.59 | 8.62 | 1.77 | 11.07 | 8.56 | 15.35 | 11.27 | 14.71 |
| HDT, 264 psi, °C | 78.5 | -- | -- | -- | 78.3 | 76.5 | 76.5 | 74.8 | 76.2 | 70.7 |
| HDT, 66 psi, °C | 91.1 | -- | -- | -- | 92.4 | 89.8 | 90.8 | 87.9 | 89.4 | 85.5 |
| Tensile yld. (psi) | 6960 | 5530 | 4780 | 4100 | 6760 | 5260 | 6100 | 4560 | 5270 | 3800 |
| Tensile elg. (%) | 14 | 24 | 65 | 76 | 44 | 73 | 37 | 78 | 57 | 97 |
| Tensile mod. (Kpsi) | 380 | 300 | 250 | 210 | 410 | 310 | 340 | 270 | 300 | 220 |

| | | | | | | | | | | |
|---|---|---|---|---|---|---|---|---|---|---|
| * Total rubber is based upon the level of polybutadiene in the HRG. | | | | | | | | | | |

Compositions 1 to 4 found in Table 1 demonstrate the physical properties of blends of a monovinylidene aromatic compound comprising (a) a rubber modified monovinylidene aromatic graft copolymer substrate and (b) an ungrafted rigid copolymer superstrate. As noted by these data, the highest notched Izod obtained was about 8.6 ft-lbs/in. Illustrative compositions 5 to 10 contain a chlorinated polyolefin having a melt viscosity greater than about 10 poise at 1000 sec⁻¹. As seen by these data, the notched Izod was unexpected improved to as high as 15.3 ft-lbs/in (composition 8). Moreover, very high impact strengths were also obtained with as little as 14 parts chlorinated polyolefin (note compositions 7 and 9). These results are unexpected especially in view of U.S. Pat. No. 3,494,982 wherein the level of chlorinated polyolefin required to obtain the very high notched Izod impact values appears to be about 40 parts. At the higher levels of chlorinated polyolefin as in U.S. Pat. No. 3,494,982, the tensile modulus unacceptably decreases as the material becomes more thermoplastic elastomer-like in modulus characteristics.

**Table 2.**

| Composition: | 11 | 12 | 13 | 14 | 15 | 16 |
|---|---|---|---|---|---|---|
| SAN | 62 | 52 | 65 | 54 | 55 | 0 |
| HRG | 10 | 20 | 10 | 10 | 20 | 0 |
| CPE-1 | 0 | 0 | 0 | 0 | 0 | 0 |
| CPE-2 | 28 | 28 | 0 | 0 | 0 | 0 |
| CPE-3 | 0 | 0 | 25 | 36 | 25 | 0 |
| Adds. | yes | yes | yes | yes | yes | no |
| DTL | 0.8 | 0.8 | 0.8 | 0.8 | 0.8 | 0 |
| HIPS | 0 | 0 | 0 | 0 | 0 | 100 |
| Total rubber* content (Wt. %) | 5 | 10 | 5 | 5 | 10 | -- |

| Properties: | | | | | | |
|---|---|---|---|---|---|---|
| NII, ft-lb/in | 1.6 | 5.03 | 0.77 | 1.85 | 5.04 | 3.54 |
| HDT, 264 psi, °C | 78.3 | 75 | -- | -- | 75.1 | 68 |
| HDT, 66 psi, °C | 90.8 | 87.8 | -- | -- | 87.7 | 77.2 |
| Tensile yld. (psi) | 5650 | 5000 | -- | 5510 | 5740 | 2130 |
| Tensile elg. (%) | 46 | 51 | -- | 59 | 37 | 76 |
| Tensile mod. (Kpsi) | 320 | 280 | -- | 300 | 310 | 220 |

| | | | | | | |
|---|---|---|---|---|---|---|
| * Total rubber is based upon the level of polybutadiene in the HRG. | | | | | | |

Compositions 11 to 15 demonstrate blends made using a chlorinated polyolefin having a melt viscosity lower than 10 poise at 1000 sec⁻¹. As seen by these data, the highest notched Izod value obtained was about 5 ft-lbs/in. Composition 16 presents the physical properties for a high impact polystyrene resin. As seen by the data, the notched Izod impact strength was about 3.5 ft-lbs/in.

**Table 3.**

| Composition: | 17 | 18 | 19 | 20 | 21 | 22 | 23 | 24 |
|---|---|---|---|---|---|---|---|---|
| AMSAN-1 | 52 | 66 | 56 | 52 | 62 | 0 | 0 | 0 |
| AMSAN-2 | 0 | 0 | 0 | 0 | 0 | 100 | 86 | 72 |
| HRG | 48 | 20 | 30 | 20 | 10 | 0 | 0 | 0 |
| CPE-1 | 0 | 14 | 14 | 28 | 28 | 0 | 14 | 28 |
| Adds. | yes | yes | yes | yes | yes | yes | yes | yes |
| DTL | 0.25 | 0.25 | 0.25 | 0.25 | 0.25 | 0.25 | 0.25 | 0.25 |
| Total rubber* content (Wt. %) | 24 | 10 | 15 | 10 | 5 | 14 | 12 | 10 |

| Properties: | | | | | | | | |
|---|---|---|---|---|---|---|---|---|
| NII, ft-lb/in | 7.55 | 6.74 | 8.53 | 10.49 | 8.58 | 4.63 | 7.96 | 10.75 |
| HDT, 264 psi, °C | -- | 103 | -- | 101.6 | -- | -- | 105.9 | -- |
| HDT, 66 psi, °C | -- | 87.9 | 86.8 | 82.6 | 87.2 | -- | 90.4 | 83.6 |
| Tensile yld. (psi) | 5590 | 6650 | 5690 | 4500 | 5490 | 7000 | 6340 | 4680 |
| Tensile elg. (%) | 32 | 28 | 38 | 47 | 38 | 31 | 31 | 45 |
| Tensile mod. (Kpsi) | 310 | 350 | 320 | 260 | 310 | 390 | 350 | 260 |

| | | | | | | | | |
|---|---|---|---|---|---|---|---|---|
| * Total rubber is based upon the level of polybutadiene in the HRG. | | | | | | | | |

The compositions in Table 3 illustrate the broad utility of the present invention such as in, for example, monovinylidene aromatic compounds containing α-methylstyrene as a comonomer. As seen by these illustrative examples, very high impact thermoplastic compositions were obtained that have higher heat distortion temperatures than the compositions contained within Tables 1 and 2 wherein the monovinylidene aromatic compounds were derived from styrene monomer.

While variations of this invention will be suggested to those skilled in the art, in view of the above disclosure, any such variations are intended to be within the scope of the claims appended hereto.

## Claims

1. A thermoplastic resin composition comprising:
(A) a monovinylidene aromatic compound comprising:
(a) a rubber modified monovinylidene aromatic graft copolymer, and
(b) an ungrafted rigid copolymer; and
(B) a chlorinated polyolefin.

2. The thermoplastic resin composition of Claim 1, wherein the rubber modified monovinylidene aromatic graft copolymer is a high rubber graft copolymer.

3. The thermoplastic resin composition of Claim 2, wherein the rubber modified monovinylidene aromatic graft copolymer is derived from at least one monomer of the group consisting of conjugated diene monomers, nonconjugated diene monomers, (C₁-C₁₂)alkyl acrylate monomers, (C₂-C₈)olefin monomers, ethylenically unsaturated nitrile monomers, and vinyl aromatic monomers.

4. The thermoplastic resin composition of Claim 3, wherein the ungrafted rigid copolymer is derived from at least one monomer of the group consisting of (C₁-C₁₂)alkyl (meth)acrylate monomers, vinyl aromatic monomers, and ethylenically unsaturated nitrile monomers.

5. The thermoplastic resin composition of Claim 2, wherein the rubber modified monovinylidene aromatic graft copolymer is an acrylonitrile-butadiene-styrene resin.

6. The thermoplastic resin composition of Claim 2, wherein the ungrafted rigid copolymer comprises repeating units derived from one or more monomers selected from styrene, α-methyl styrene, and acrylonitrile.

7. The thermoplastic resin composition of Claim 1, wherein the chlorinated polyolefin is a chlorinated polyethylene, a chlorosulfonated polyethylene, or a mixture of a chlorinated polyethylene and a chlorosulfonated polyethylene.

8. The thermoplastic resin composition of Claim 1, wherein the chlorinated polyethylene is present at a level up to about 35 percent by weight based on the weight of the entire composition.

9. The thermoplastic resin composition of Claim 1, wherein the composition has a tensile modulus of at least about 200,000 psi.

10. The thermoplastic resin composition of Claim 1, wherein the composition has a heat distortion temperature measured at 264 psi of at least about 65°C.
